# FASCICULE DE BREVET EUROPEEN

(11) **EP 3 887 074 B1**
(45) Date de publication et mention de la délivrance du brevet: **09.10.2024**
(21) Numéro de dépôt: 19801898.8
(22) Date de dépôt: 18.11.2019
(51) Int. Cl.: B21D 39/06, B21D 53/92, F16B 17/00

(54) **PROCÉDÉ D'ASSEMBLAGE ENTRE UNE POUTRE ET UN ÉLÉMENT STRUCTUREL D'UN SIÈGE D'AVION**
VERFAHREN ZUR MONTAGE EINES TRÄGERS UND EINES STRUKTURELLEN ELEMENTS EINES FLUGZEUGSITZES
METHOD FOR ASSEMBLING A BEAM AND A STRUCTURAL ELEMENT OF AN AIRPLANE SEAT

(30) Priorité: 26.11.2018 FR 1871820; 24.01.2019 FR 1900616
(43) Date de publication de la demande: 06.10.2021
(73) Titulaire: Safran Seats, 78370 Plaisir (FR)
(72) Inventeur: YVON, Florent, 37500 La Roche Clermault (FR); CAILLETEAU, Jérémy, 36120 Saint Août (FR)
(74) Mandataire: Marconnet, Sébastien
(86) Numéro de dépôt international: PCT/EP2019/081589
(87) Numéro de publication internationale: WO 2020/109043

(56) Documents cités:
- FR-A1- 2 942 431
- JP-A- H07 116 751
- US-A- 2 959 207
- US-A- 5 730 492
- US-A1- 2011 001 350

## Description

La présente invention porte sur un procédé d'assemblage entre une poutre et un élément structurel d'un siège d'avion. L'invention trouve une application particulièrement avantageuse pour la réalisation de sièges d'avion de type classe "économique" ou classe "affaire".

De façon connue en soi, les sièges d'avion comportent des éléments structurels, tels que des crosses pour les accoudoirs ou des pieds de support, montés sur des poutres. A cet effet, chaque élément structurel comporte une zone de passage de poutre, de sorte que la fixation de l'ensemble peut être effectuée au moyen de vis traversant des ouvertures ménagées dans la poutre et l'élément structurel. Une solution alternative consiste à utiliser des mécanismes de bridage à vis.

Il existe une grande diversité de configurations possibles pour un même siège compte tenu des dimensions des places et du positionnement des rails susceptibles de varier d'un type d'avion à un autre. L'utilisation d'un système à vis engendre une contrainte industrielle liée à la quantité importante de références de perçages à prévoir à l'avance dans les poutres en fonction de la configuration du siège. En outre, les vis augmentent le poids de l'ensemble.

Le document FR2942431 décrit un siège comprenant une assise et un mécanisme de rehausse comprenant une bielle présentant un alésage qui comporte au moins une encoche sensiblement radiale, un tube de révolution présentant une partie d'emmanchement disposée dans l'alésage, ledit tube comportant extérieurement deux butées axiales en contact de part et d'autre avec la bielle, au moins l'une desdites butées axiales consistant en un bourrelet présentant une surface d'arrêt en contact avec la bielle, et une surface d'appui opposée à la surface d'arrêt, la partie d'emmanchement comportant extérieurement au moins un renflement s'étendant dans l'encoche, dans lequel le bourrelet comporte au moins un enfoncement axial dans la surface d'appui, en regard de l'encoche, ledit enfoncement étant contigu au renflement.

Le document US5730492A divulgue une structure de siège d'avion comportant au moins un élément structurel et au moins une poutre.

L'invention vise à remédier efficacement à ces inconvénients en proposant un procédé d'assemblage et une structure de siège d'avion définis dans le jeu de revendications ci-après.

L'invention permet ainsi, grâce à la liaison effectuée entre la poutre et l'élément structurel via l'évidement et la déformation correspondante de la poutre, de faciliter la réalisation de l'assemblage en évitant d'avoir recours à des vis et des trous de passage associés ménagés dans la poutre. L'invention permet ainsi de gérer aisément la diversité de configurations de sièges tout en réduisant le poids de l'ensemble. L'invention procure également un gain de temps d'assemblage par rapport au procédé de l'état de la technique nécessitant de nombreuses opérations de vissage.

Selon l'invention, ledit procédé comporte une étape de déformation de la zone de passage de poutre, de sorte qu'au moins une portion d'une face interne de ladite zone de passage de poutre vienne en appui contre une face externe de la poutre suivant une surface de contact.

Selon une mise en oeuvre, ledit procédé comporte en outre une étape de déformation de la zone de passage de poutre, de sorte qu'au moins deux portions de la face interne de la zone de passage de poutre viennent en appui contre une face externe de la poutre suivant deux surfaces de contact, lesdites surfaces de contact étant situées axialement de part et d'autre de l'évidement.

Selon une mise en oeuvre, une section transversale de la poutre est creuse et non circulaire.

Selon une mise en oeuvre, une section transversale de la poutre est choisie notamment parmi les profils de formes suivants: rectangulaire, rectangulaire à côtés arrondies, carrée, ou ovoïde.

Selon une mise en oeuvre, l'évidement présente une forme de calotte sphérique ou une forme de rainure.

Selon une mise en oeuvre, l'évidement est non traversant.

Selon une mise en oeuvre, une profondeur de l'évidement est de l'ordre d'une épaisseur d'une paroi de la poutre.

Selon une mise en oeuvre, une largeur maximum de l'évidement est inférieure à une largeur de l'élément structurel mesurée au niveau de la zone de passage de poutre.

Selon une mise en oeuvre, deux évidements sont réalisés dans deux faces opposées l'une par rapport à l'autre de la poutre. En variante, les évidements sont réalisés dans deux côtés consécutifs de la poutre.

Selon une mise en oeuvre, l'élément structurel est une crosse de siège ou un pied de support, ou toute autre pièce de fixation annexe montée directement sur la poutre.

Selon une mise en oeuvre, ledit procédé comporte en outre une étape d'insertion d'au moins une deuxième poutre à l'intérieur de la poutre afin de renforcer localement l'ensemble.

L'invention a également pour objet une structure de siège d'avion telle que définie dans la revendication indépendante 12.

Selon une réalisation, au moins deux portions de la face interne de la zone de passage de poutre sont en appui contre une face externe de la poutre suivant deux surfaces de contact, lesdites surfaces de contact étant situées axialement de part et d'autre de l'évidement.

Selon une réalisation, la poutre et/ou l'élément structurel sont réalisés dans un matériau ayant un allongement plastique suffisant pour leur déformation lors de l'assemblage compris entre 5% et 15%.

Selon une réalisation, la poutre et/ou l'élément structurel sont réalisés dans un matériau choisi parmi un des matériaux suivants: aluminium, acier, magnésium, ou inox.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles:
[Fig. 1] La figure 1 est une vue en perspective d'une structure de siège selon la présente invention;
[Fig. 2a] [Fig. 2b] Les figures 2a et 2b sont des vues illustrant différents modes de réalisation d'un évidement dans une face interne d'une zone de passage de poutre d'un élément structurel de siège;
[Fig.3] La figure 3 est une vue en perspective illustrant l'étape d'insertion d'une poutre à l'intérieur d'une zone de passage de poutre d'un élément structurel de siège;
[Fig. 4a] [Fig. 4b] Les figures 4a et 4b sont des vues en coupe et de côté illustrant la mise en place d'un outil de déformation à l'intérieur de la poutre;
[Fig. 5a] [Fig. 5b] Les figures 5a et 5b sont des vues en perspective et de côté illustrant l'étape de déformation de la poutre mise en oeuvre dans le procédé selon l'invention;
[Fig. 6a] [Fig. 6b] Les figures 6a et 6b sont des vues en perspective et de côté de l'assemblage poutre-élément structurel de siège obtenu à la fin de la mise en oeuvre du procédé selon la présente invention;
[Fig. 7a] [Fig. 7b] Les figures 7a et 7b sont des vues de différentes formes d'une section transversale d'une poutre utilisée dans l'assemblage selon l'invention;
[Fig. 8] La figure 8 est une vue en coupe d'une variante de réalisation comportant une poutre supplémentaire disposée à l'intérieur d'une poutre principale.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

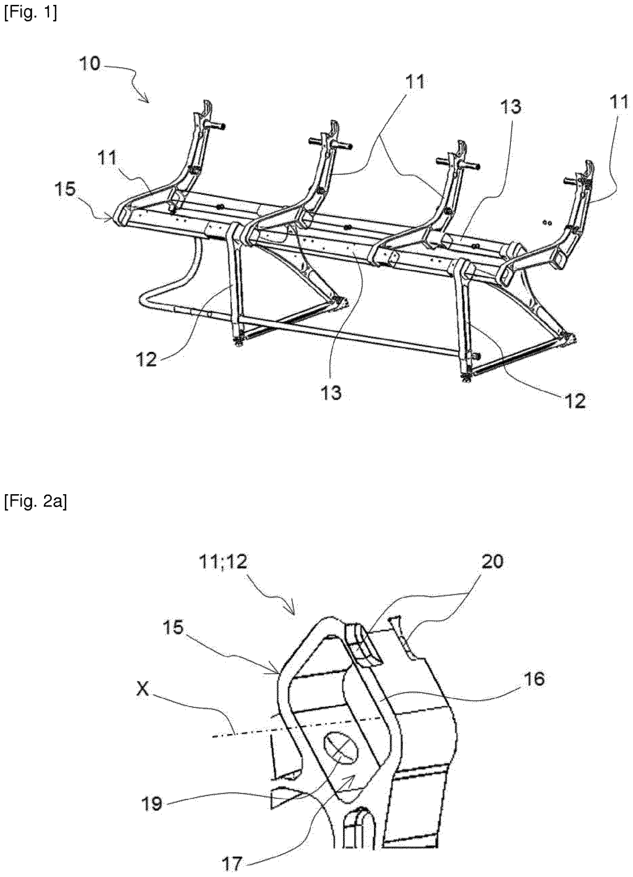

La figure 1 montre une structure 10 de siège d'avion comportant des éléments structurels, en l'occurrence des crosses 11 destinées à porter des accoudoirs ou des dossiers ainsi que des pieds de support 12 destinés à poser et fixer le siège sur le plancher de l'avion. Les éléments structurels 11, 12 sont montés sur deux poutres 13 de forme allongée. Les poutres 13 sont creuses et s'étendent suivant des directions longitudinales sensiblement parallèles entre elles. Les poutres 13 sont montées préférentiellement de façon transversale par rapport à l'axe de l'avion.

Dans l'exemple représenté d'un siège à trois places, la structure de siège 10 comporte quatre crosses 11 et deux pieds de support 12. Bien entendu, le nombre de crosses 11 et de pieds de support 12 pourra varier en fonction de la configuration du siège, et en particulier du nombre de places souhaité.

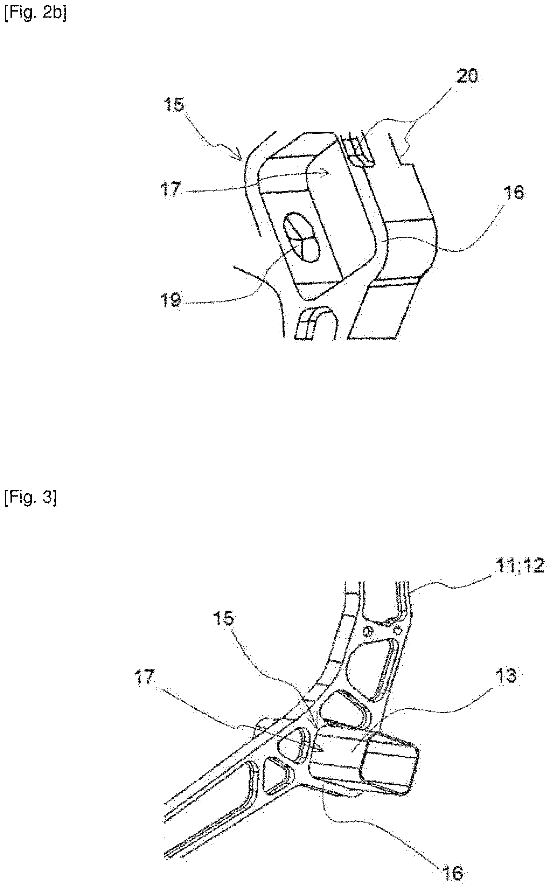

On détaille ci-après, en référence avec les figures 2 à 6b, le procédé d'assemblage entre une poutre 13 et un élément structurel 11, 12 du siège d'avion.

Pour assurer le montage des poutres 13, l'élément structurel 11, 12 comporte une zone 15 de passage de poutre, tel que montré sur la figure 2a. Cette zone 15 de passage de poutre comporte une paroi 16 délimitant une ouverture 17 traversante d'axe X1 autorisant le passage de la poutre 13. Afin de limiter les mouvements relatifs en rotation de l'élément structurel 11, 12 par rapport à la poutre 13, ladite poutre 13 et ladite zone 15 de passage de poutre présentent des sections transversales de forme non circulaire. La poutre 13 est de préférence un profilé tubulaire et présente donc une section transversale creuse.

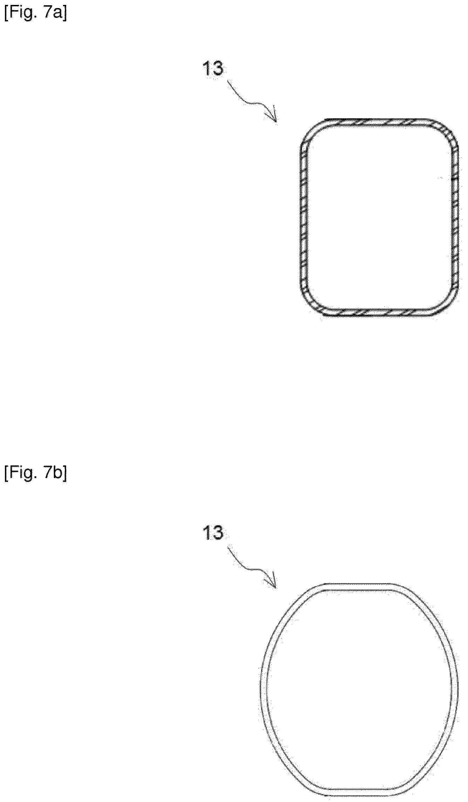

Dans l'exemple de réalisation représenté à la figure 7a notamment, la poutre 13 présente une section transversale de forme rectangulaire. En variante, comme cela est représenté sur la figure 7b, la poutre 13 présente une section transversale de forme rectangulaire à côtés arrondis. En l'occurrence, les plus grands côtés du rectangle sont arrondis de manière à présenter une forme bombée vers l'extérieur. En variante, les plus petits côtés du rectangle pourront présenter une forme arrondie. En variante, la poutre 13 pourra présenter une section transversale de forme carrée ou ovoïde, ou toute autre forme non circulaire adaptée à l'application. Dans tous les cas, la zone 15 de passage de poutre présente une section transversale ayant une forme correspondant à celle de la poutre 13. Une épaisseur de parois du profil de la poutre 13 (rectangulaire, carrée ou ovoïde ou autre) est de préférence comprise entre 1 mm et 3mm.

Dans le cas où il est possible d'effectuer un indexage en position de la poutre 13 par rapport à la zone 15 de passage de poutre, on pourrait toutefois avoir recours à des poutres 13 de section circulaire. L'indexage en position pourra être effectué via une rainure ménagée dans la poutre 13 destinée à s'indexer dans une nervure correspondante ménagée dans la zone 15 de passage de poutre, ou inversement. Quelle que soit la forme du profil de la poutre 13 choisie, son encombrement est tel que le contour externe de la poutre 13 est circonscrit notamment dans un carré de 60mm de côté.

Une première étape du procédé d'assemblage consiste à réaliser, par usinage, au moins un évidement 19 dans une face interne de la zone 15 de passage de poutre de l'élément structurel 11, 12. L'évidement 19 présente une forme de portion de sphère, c'est-à-dire une forme de calotte sphérique. A cet effet, l'usinage de l'évidement 19 pourra être réalisé au moyen d'un outil 22 en forme de sphère. L'évidement 19 est non traversant. Une profondeur de l'évidement 19 est de l'ordre d'une épaisseur d'une paroi de la poutre 13, et est notamment comprise entre 1mm et 2.5mm, et vaut de préférence 1.5mm aux tolérances d'usinage près. De préférence, une largeur maximum de l'évidement 19 est inférieure à une largeur de l'élément structurel 11, 12 mesurée au niveau de la zone 15 de passage de poutre.

Deux évidements 19 sont avantageusement réalisés dans deux faces opposées l'une par rapport à l'autre de la poutre 13. En variante, les évidements 19 sont réalisés dans deux faces consécutives de la poutre 13.

En variante, comme cela est montré sur la figure 2b, on pourra réaliser un évidement 19 présentant une forme de double portions de sphères qui se chevauchent l'une par rapport à l'autre. Toute autre forme creuse adaptée à l'application pourra être réalisée dans une face interne de la zone 15. En variante, l'évidement 19 pourra présenter une forme de rainure.

On pourra également réaliser des encoches 20 dans la face externe de l'élément structurel 11, 12, notamment de la zone 15 de passage de poutre, afin de réduire des jeux de la liaison entre la poutre 13 et l'élément structurel 11, 12. Ces encoches 20 constituées par des portions déformées de l'élément structurel 11, 12 sont avantageusement réalisées du côté des extrémités axiales de la zone 15 de passage de poutre.

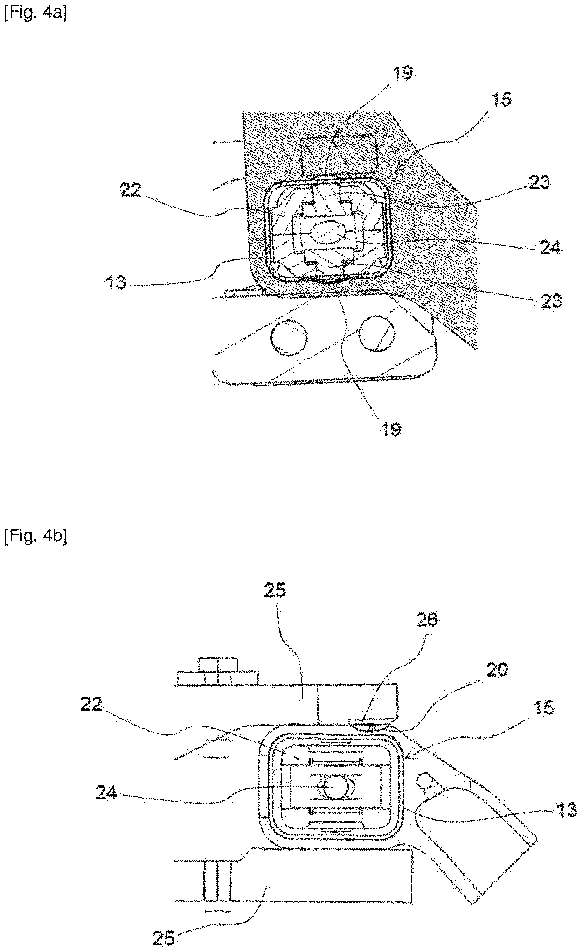

Comme on peut le voir sur la figure 3, la poutre 13 est insérée dans la zone 15 de passage de poutre via l'ouverture 17. Un outil 22 de déformation de la poutre 13 est ensuite mis en place, tel que cela est montré sur les figures 4a et 4b. Plus précisément, l'outil 22 comporte un ensemble formé notamment par deux poinçons 23 et une came 24 disposée entre les poinçons 23. Cet ensemble est destiné à être inséré à l'intérieur de la poutre creuse 13. Les poinçons 23 présentent avantageusement une forme complémentaire de celle des évidements 19. Les poinçons 23 sont mobiles radialement entre une position de repos et une position active. A cet effet, la came 24 permet d'assurer le déplacement des poinçons 23 lorsqu'elle est entraînée en rotation. L'entraînement en rotation de la came 24 pourra être effectué de façon manuelle via un arbre d'entraînement ou de façon automatique à l'aide d'un moteur électrique par exemple.

Par ailleurs, l'outil 22 comporte deux mâchoires 25 articulées l'une par rapport à l'autre et destinées à venir enserrer deux faces opposées de la poutre 13. Une mâchoire 25 comporte des portions en saillies 26 destinées à coopérer chacune avec une encoche 20 de forme correspondante.

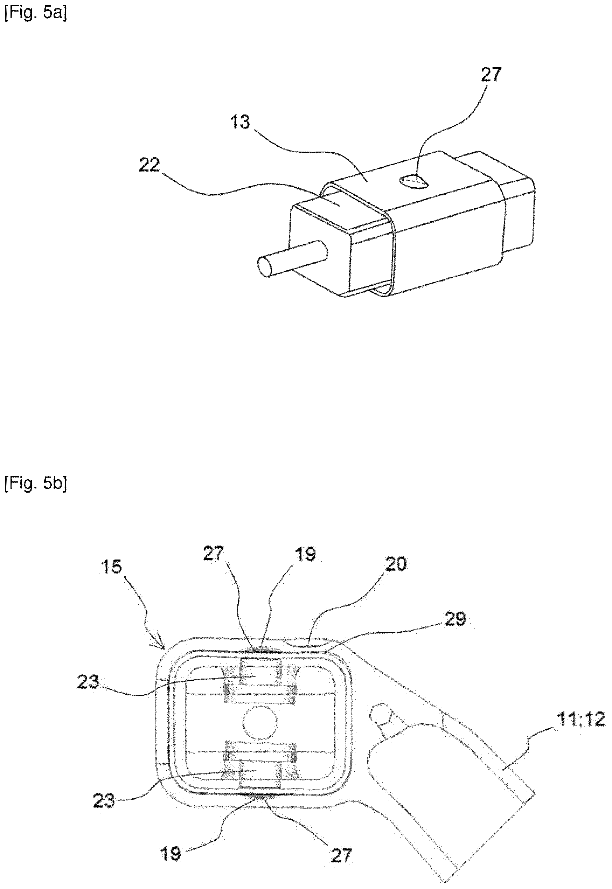

Comme on peut le voir sur les figures 5a et 5b, l'outil 22 déforme ensuite la poutre 13 de sorte qu'une portion déformée 27 de la poutre 13 pénètre à l'intérieur de l'évidement 19 correspondant de la zone 15 de passage de poutre. A cette fin, la came 24 est tournée afin de déplacer radialement les poinçons 23 qui viennent déformer localement la poutre 13 pour faire pénétrer de façon complémentaire une portion 27 de la face externe de la poutre 13 à l'intérieur d'un évidement 19 correspondant.

Les mâchoires 25 déforment également la zone 15 de passage de poutre au niveau des encoches 20, de sorte que deux (ou plus) portions de la face interne de la zone 15 de passage de poutre viennent en appui contre une face externe de la poutre 13 suivant deux surfaces de contact 29. Les surfaces de contact 29 sont situées axialement de part et d'autre de l'évidement 19.

Ces surfaces de contact 29 permettent de limiter un jeu entre la poutre 13 et la zone 15 de passage de poutre engendré par la déformation plastique de la face externe de la poutre 13.

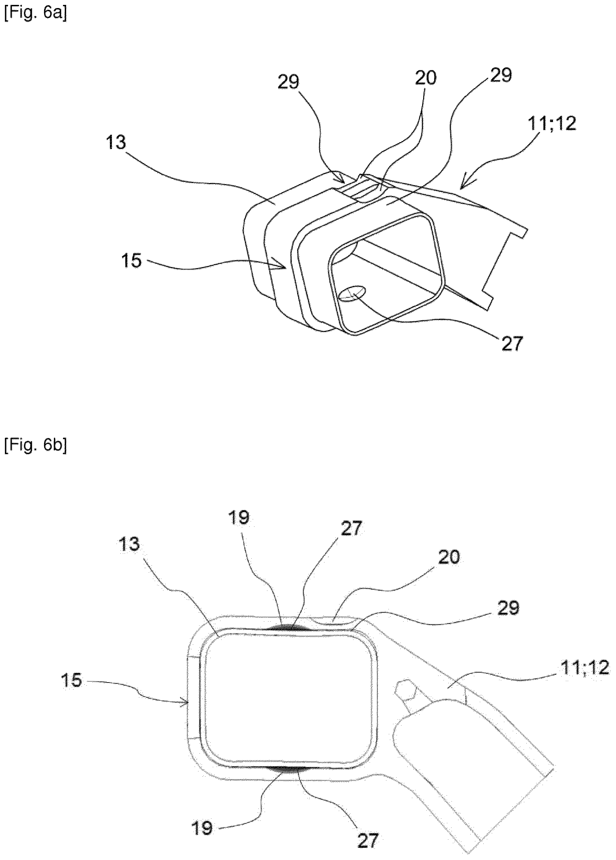

L'outil de déformation 22 est ensuite retiré. On obtient ainsi un assemblage de pièces dans lequel la poutre 13 comporte au moins une portion déformée 27 pénétrant à l'intérieur d'un évidement 19 de la zone 15 de passage de poutre, tel que cela est montré sur les figures 6a et 6b. En l'occurrence, deux portions déformées 27 pénètrent à l'intérieur de deux évidements 19 opposés l'un par rapport à l'autre. Bien entendu, il est possible de prévoir un seul évidement 19 dans la zone 15 de passage de poutre ou plus de deux. Cela dépend de l'application et du niveau de résistance souhaité de la liaison mécanique. L'assemblage présente en outre deux surfaces de contact 29 entre la face interne de la zone 15 de passage de poutre et la face externe de la poutre 13. Il est également possible de prévoir une seule ou plus de deux surfaces de contact 29. La réalisation des surfaces de contact 29 n'est toutefois pas indispensable.

Avantageusement, la poutre 13 et/ou l'élément structurel 11, 12 sont réalisés dans un matériau ayant un allongement plastique suffisant pour leur déformation lors de l'assemblage compris entre 5% et 15%. La poutre 13 et/ou l'élément structurel 11, 12 présentent notamment une résistance mécanique à la contrainte en rupture au moins égale à 450 MPa pour un matériau réalisé dans un type d'aluminium particulier.

La poutre 13 et/ou l'élément structurel 11, 12 sont réalisés dans un matériau choisi parmi un des matériaux suivants: aluminium, notamment de type série 7000 selon une norme de définition, acier, magnésium, ou inox.

Alternativement, le procédé selon l'invention pourra être mis en oeuvre avec des pièces autres qu'une crosse 11 ou un pied de support 12, notamment toute pièce de fixation annexe montée directement sur la poutre, telle qu'un élément de fixation d'assise, des repose-pieds, ou des boîtiers électriques.

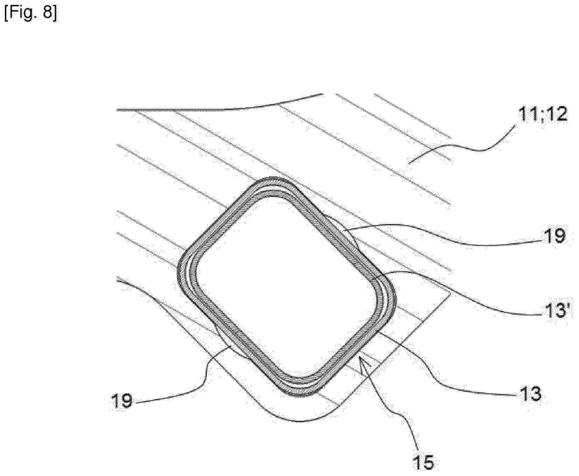

Comme cela est illustré par la figure 8, il est possible d'insérer une deuxième poutre creuse 13' à l'intérieur du creux de la poutre 13 pour renforcer localement la structure. Cette poutre 13' est assemblée avec la première poutre 13 via le même procédé qui permet de solidariser la poutre 13 à l'élément structurel 11, 12. Les poutres 13, 13' peuvent être montées ensemble à l'intérieur de la zone de passage 15 de poutre ou séparément l'une à la suite de l'autre. En variante, il est possible d'insérer plus de deux poutres 13, 13' l'une dans l'autre afin de renforcer localement la structure.

Bien entendu les différentes caractéristiques, variantes et/ou formes de réalisation de la présente invention peuvent être associées les unes avec les autres selon diverses combinaisons dans la mesure où elles sont couvertes par les revendications en annexe.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention, tout en restant dans le cadre des revendications en annexe.

## Revendications

1. Procédé d'assemblage entre une poutre (13) et un élément structurel (11, 12) d'un siège d'avion, **caractérisé en ce qu'**il comporte:
- une étape de réalisation d'au moins un évidement (19) dans une face interne d'une zone (15) de passage de poutre de l'élément structurel (11, 12),
- une étape d'insertion de la poutre (13) dans la zone (15) de passage de poutre,
- une étape de déformation de la poutre (13) de sorte qu'une portion déformée (27) de la poutre (13) pénètre à l'intérieur de l'évidement (19) de la zone (15) de passage de poutre, et
- une étape de déformation de la zone (15) de passage de poutre, de sorte qu'au moins une portion d'une face interne de ladite zone (15) de passage de poutre vienne en appui contre une face externe de la poutre (13) suivant une surface de contact (29).

2. Procédé selon la revendication 1, **caractérisé en ce qu'**il comporte en outre une étape de déformation de la zone (15) de passage de poutre, de sorte qu'au moins deux portions de la face interne de la zone (15) de passage de poutre viennent en appui contre une face externe de la poutre (13) suivant deux surfaces de contact (29), lesdites surfaces de contact (29) étant situées axialement de part et d'autre de l'évidement (19).

3. Procédé selon la revendication 1 ou 2, **caractérisé en ce qu'**une section transversale de la poutre (13) est creuse et non circulaire.

4. Procédé selon l'une quelconque des revendications 1 à 3, **caractérisé en ce qu'**une section transversale de la poutre (13) est choisie notamment parmi les profils de formes suivants: rectangulaire, rectangulaire à côtés arrondies, carrée, ou ovoïde.

5. Procédé selon l'une quelconque des revendications 1 à 4, **caractérisé en ce que** l'évidement (19) présente une forme de calotte sphérique.

6. Procédé selon l'une quelconque des revendications 1 à 5, **caractérisé en ce que** l'évidement (19) est non traversant.

7. Procédé selon l'une quelconque des revendications 1 à 6, **caractérisé en ce qu'**une profondeur de l'évidement (19) est de l'ordre d'une épaisseur d'une paroi de la poutre (13).

8. Procédé selon l'une quelconque des revendications 1 à 7, **caractérisé en ce qu'**une largeur maximum de l'évidement (19) est inférieure à une largeur de l'élément structurel (11, 12) mesurée au niveau de la zone (15) de passage de poutre.

9. Procédé selon l'une quelconque des revendications 1 à 8, **caractérisé en ce que** deux évidements (19) sont réalisées dans deux faces opposées l'une par rapport à l'autre de la poutre (13).

10. Procédé selon l'une quelconque des revendications 1 à 9, **caractérisé en ce que** l'élément structurel (11, 12) est une crosse (11) de siège ou un pied de support (12) ou toute autre pièce de fixation annexe montée directement sur la poutre (13).

11. Procédé selon l'une quelconque des revendications 1 à 10, **caractérisé en ce qu'**il comporte en outre une étape d'insertion d'au moins une deuxième poutre (13') à l'intérieur de la poutre (13).

12. Structure de siège d'avion (10) comportant au moins un élément structurel (11, 12) et au moins une poutre (13), **caractérisée en ce que** l'élément structurel (11, 12) comporte au moins un évidement (19) ménagé dans une face interne d'une zone (15) de passage de poutre de l'élément structurel (11, 12), la poutre (13) comportant une portion déformée (27) pénétrant à l'intérieur dudit évidement (19) de la zone (15) de passage de poutre, la zone (15) de passage de poutre comprenant une portion déformée, de sorte qu'au moins une portion d'une face interne de ladite zone (15) de passage de poutre vienne en appui contre une face externe de la poutre (13) suivant une surface de contact (29).

13. Structure de siège selon la revendication 12, **caractérisée en ce qu'**au moins deux portions de la face interne de la zone (15) de passage de poutre sont en appui contre une face externe de la poutre (13) suivant deux surfaces de contact (29), lesdites surfaces de contact (29) étant situées axialement de part et d'autre de l'évidement (19).

14. Structure selon la revendication 12 ou 13, **caractérisée en ce que** la poutre (13) et/ou l'élément structurel (11, 12) sont réalisés dans un matériau ayant un allongement plastique suffisant pour leur déformation lors de l'assemblage compris entre 5% et 15%.

15. Structure selon l'une quelconque des revendications 12 à 14, **caractérisée en ce que** la poutre (13) et/ou l'élément structurel (11, 12) sont réalisés dans un matériau choisi parmi un des matériaux suivants: aluminium, acier, magnésium, ou inox.

## Patentansprüche

1. Verfahren zur Verbindung eines Balkens (13) mit einem Strukturelement (11, 12) eines Flugzeugsitzes, **dadurch gekennzeichnet, dass** es umfasst die folgenden Schritte:
- Durchführen mindestens einer Aussparung (19) in einer Innenseite einer Balkendurchgangszone (15) des Strukturelements (11, 12),
- Einführen des Balkens (13) in die Balkendurchgangszone (15),
- Verformen des Balkens (13), so dass ein verformter Abschnitt (27) des Balkens (13) in die Aussparung (19) der Balkendurchgangszone (15) eindringt, und
- Verformen der Balkendurchgangszone (15), so dass zumindest ein Abschnitt einer Innenseite der Balkendurchgangszone (15) entlang einer Kontaktfläche (29) an einer Außenseite des Balkens (13) anliegt.

2. Verfahren nach Anspruch 1, **dadurch gekennzeichnet, dass** es außerdem einen Schritt des Verformens der Balkendurchgangszone (15) umfasst, so dass mindestens zwei Abschnitte der Innenseite der Balkendurchgangszone (15) entlang zweier Kontaktflächen (29) an einer Außenseite des Balkens (13) anliegen, wobei die Kontaktflächen (29) axial auf beiden Seiten der Aussparung (19) angeordnet sind.

3. Verfahren nach Anspruch 1 oder 2, **dadurch gekennzeichnet, dass** ein Querschnitt des Balkens (13) ist hohl und nicht kreisförmig.

4. Verfahren nach einem der Ansprüche 1 bis 3, **dadurch gekennzeichnet, dass** ein Querschnitt des Balkens (13) insbesondere aus den Profilen mit folgenden Formen ausgewählt ist: rechteckig, rechteckig mit abgerundeten Seiten, quadratisch oder eiförmig.

5. Verfahren nach einem der Ansprüche 1 bis 4, **dadurch gekennzeichnet, dass** die Aussparung (19) die Form einer Kugelkalotte aufweist.

6. Verfahren nach einem der Ansprüche 1 bis 5, **dadurch gekennzeichnet, dass** die Aussparung (19) blind ausgebildet ist.

7. Verfahren nach einem der Ansprüche 1 bis 6, **dadurch gekennzeichnet, dass** eine Tiefe der Aussparung (19) in der Größenordnung einer Wandstärke des Balkens (13) liegt.

8. Verfahren nach einem der Ansprüche 1 bis 7, **dadurch gekennzeichnet, dass** eine maximale Breite der Aussparung (19) geringer als eine an der Balkendurchgangzone (15) gemessene Breite des Strukturelements (11, 12) ist.

9. Verfahren nach einem der Ansprüche 1 bis 8, **dadurch gekennzeichnet, dass** in zwei gegenüberliegenden Flächen des Balkens (13) zwei Aussparungen (19) eingebracht sind.

10. Verfahren nach einem der Ansprüche 1 bis 9, **dadurch gekennzeichnet, dass** das Strukturelement (11, 12) eine Sitzkonsole (11) oder ein Stützfuß (12) oder ein sonstiges zusätzliches Befestigungsteil ist, das direkt am Balken (13) montiert ist.

11. Verfahren nach einem der Ansprüche 1 bis 10, **dadurch gekennzeichnet, dass** es außerdem einen Schritt des Einfügens mindestens eines zweiten Balkens (13') in den Balken (13) umfasst.

12. Flugzeugsitzstruktur (10) mit mindestens einem Strukturelement (11, 12) und mindestens einem Balken (13), **dadurch gekennzeichnet, dass** das Strukturelement (11, 12) mindestens eine Aussparung (19) in einer Innenseite einer Balkendurchgangszone (15) des Strukturelements (11, 12) umfasst, wobei der Balken (13) einen verformten Abschnitt (27) aufweist, der in die Aussparung (19) der Balkendurchgangszone (15) eindringt, wobei die Balkendurchgangzone (15) ein verformter Abschnitt, so dass mindestens ein Abschnitt einer Innenseite der Balkendurchgangzone (15) an einer Außenseite des Balkens (13) entlang einer Kontaktfläche (29) anliegt.

13. Sitzstruktur nach Anspruch 12, **dadurch gekennzeichnet, dass** mindestens zwei Abschnitte der Innenseite der Balkendurchgangzone (15) an einer Außenseite des Balkens (13) entlang zweier Kontaktflächen (29) anliegen, wobei die Kontaktflächen (29) axial auf beiden Seiten der Aussparung (19) angeordnet sind.

14. Struktur nach Anspruch 12 oder 13, **dadurch gekennzeichnet, dass** der Balken (13) und/oder das Strukturelement (11, 12) aus einem Material bestehen, das für ihre Verformung während der Verbindung eine ausreichende plastische Dehnung zwischen 5% und 15% aufweist.

15. Struktur nach einem der Ansprüche 12 bis 14, **dadurch gekennzeichnet, dass** der Balken (13) und/oder das Strukturelement (11, 12) aus einem Material bestehen, das aus einem der folgenden Materialien ausgewählt ist: Aluminium, Stahl, Magnesium oder rostfreier Stahl.

## Claims

1. Method of assembling a beam (13) and a structural element (11, 12) of an aircraft seat to one another, **characterized in that** it comprises:
- a step of making at least one recess (19) in an internal face of a beam passage zone (15) of the structural element (11, 12),
- a step of inserting the beam (13) into the beam passage zone (15),
- a step of deforming the beam (13) so that a deformed portion (27) of the beam (13) gets into the recess (19) of the beam passage zone (15), and
- a step of deforming the beam passage zone (15), so that at least a portion of an internal face of said beam passage zone (15) bears against an external face of the beam (13) along a contact surface (29).

2. Method according to claim 1, **characterized in that** it further comprises a step of deforming the beam passage zone (15), so that at least two portions of the internal face of the beam passage zone (15) bear against an external face of the beam (13) along two contact surfaces (29), said contact surfaces (29) being located axially on either side of the recess (19).

3. Method according to claim 1 or 2, **characterized in that** a cross section of the beam (13) is hollow and not circular.

4. Method according to any one of the claims 1 to 3, **characterized in that** a cross section of the beam (13) is chosen in particular from the profiles with the following shapes: rectangular, rectangular with rounded sides, square, or ovoid.

5. Method according to any one of the claims 1 to 4, **characterized in that** the recess (19) has the shape of a spherical cap.

6. Method according to any one of the claims 1 to 5, **characterized in that** the recess (19) is blind.

7. Method according to any one of the claims 1 to 6, **characterized in that** a depth of the recess (19) is of the order of a thickness of a wall of the beam (13).

8. Method according to any one of the claims 1 to 7, **characterized in that** a maximum width of the recess (19) is less than a width of the structural element (11, 12) measured at the beam passage zone (15).

9. Method according to any one of the claims 1 to 8, **characterized in that** two recesses (19) are made in two opposite faces of the beam (13).

10. Method according to any one of the claims 1 to 9, **characterized in that** the structural element (11, 12) is a seat spreader (11) or a support foot (12) or any other additional fixing part mounted directly on the beam (13).

11. Method according to any one of the claims 1 to 10, **characterized in that** it further comprises a step of inserting at least a second beam (13') into the beam (13).

12. Aircraft seat structure (10) comprising at least one structural element (11, 12) and at least one beam (13), **characterized in that** the structural element (11, 12) includes at least one recess (19) in an internal face of a beam passage zone (15) of the structural element (11, 12), the beam (13) comprising a deformed portion (27) getting into said recess (19) of the beam passage zone (15), the beam passage zone (15) including a deformed portion, so that at least one portion of an internal face of said beam passage zone (15) bears against an external face of the beam (13) along a contact surface (29).

13. Seat structure according to claim 12, **characterized in that** at least two portions of the internal face of the beam passage zone (15) bear against an external face of the beam (13) along two contact surfaces (29), said contact surfaces (29) being located axially on either side of the recess (19) .

14. Structure according to claim 12 or 13, **characterized in that** the beam (13) and/or the structural element (11, 12) are made of a material having a sufficient plastic elongation for their deformation during assembly between 5% and 15%.

15. Structure according to any one of the claims 12 to 14, **characterized in that** the beam (13) and/or the structural element (11, 12) are made of a material chosen from one of the following materials: aluminum, steel, magnesium, or stainless steel.
